# EUROPEAN PATENT SPECIFICATION

(11) **EP 2 229 852 B1**
(45) Date of publication and mention of the grant of the patent: **28.09.2011**
(21) Application number: 10155728.8
(22) Date of filing: 08.03.2010
(51) Int. Cl.: A47J 37/12, F24C 14/00

(54) **System for cleaning cooking apparatus**
System zum Reinigen einer Kochvorrichtung
Sistème de nettoyage d'un appareil de cuisson

(30) Priority: 19.03.2009 IT MO20090061
(43) Date of publication of application: 22.09.2010
(73) Proprietor: Angelo Po Grandi Cucine-Societa'per Azioni, 41012 Carpi (MO) (IT)
(72) Inventor: Segato, Fabio, 41058, Vignola (MO) (IT)
(74) Representative: Crugnola, Pietro

(56) References cited:
- DE-A1- 19 838 864
- US-A- 4 684 412

## Description

This invention relates to a system for cleaning drainage conduits of cooking apparatuses. From the prior art systems are known for cleaning a cooking apparatus comprising a fluids mixing unit, a circuit that is suitable for procuring water from the water-distribution network, a circuit that is suitable for supplying cleaning substances, both circuits being connected to the mixing unit that is connected to dispensing means that dispenses the water and the cleaning substances inside a cooking chamber to be cleaned of the cooking apparatus. The cooking chamber is connected to a drainage circuit into which the water and the cleaning substances flow together with the encrustations removed from the cooking chamber owing to the action of said cleaning substances.

Known systems for cleaning cooking apparatuses remove the encrustations from the cooking chamber but not from the drainage circuit. The cause of this inefficiency is due to the fact that, in systems known from the state of the art, the cleaning substances flow back to the drainage circuit only after being mixed with the water in the cooking chamber and dissolving the encrustations contained therein, thus becoming substantially inactive.

In the systems known from the prior art it is thus difficult to remove effectively the encrustations that have accumulated in the drainage circuit, especially when said encrustations derive from the cooking of foods that release many residues, for example, fat residues. Document DE-A-19838864 discloses a system for cleaning a cooking apparatus according to the preamble of independent claim 1.

The object of the present invention is to provide a system for cleaning cooking apparatuses that does not have the disclosed drawbacks and in particular cleans effectively the drainage circuit also in the presence of encrustations that are difficult to remove.

Further objects and advantages of the present invention will be highlighted in the following description of an embodiment of the invention provided merely by way of non-limiting example with reference to the attached drawings, in which:
Figure 1 is a schematic view of the system that is the object of the invention;
Figure 2 is a detail of the system that is the object of the invention.

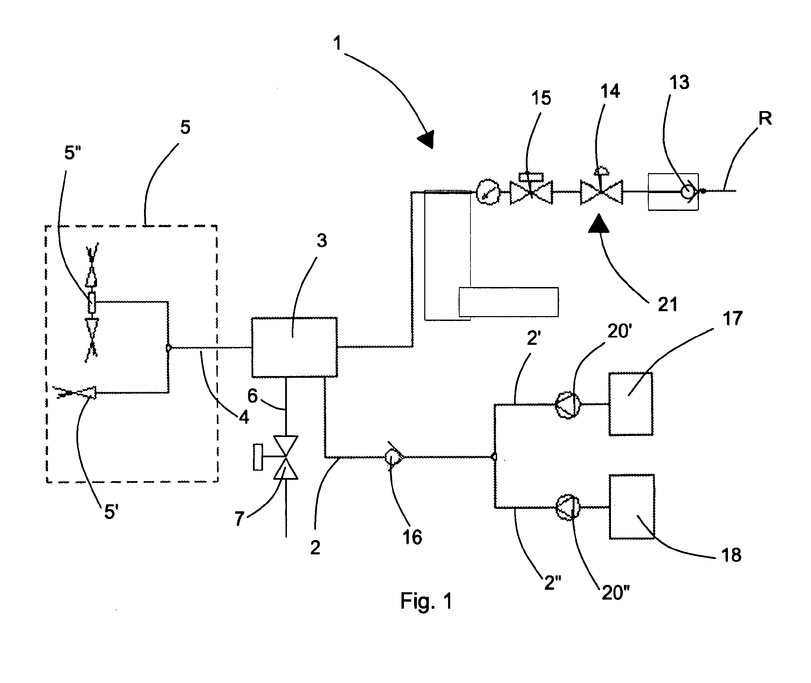

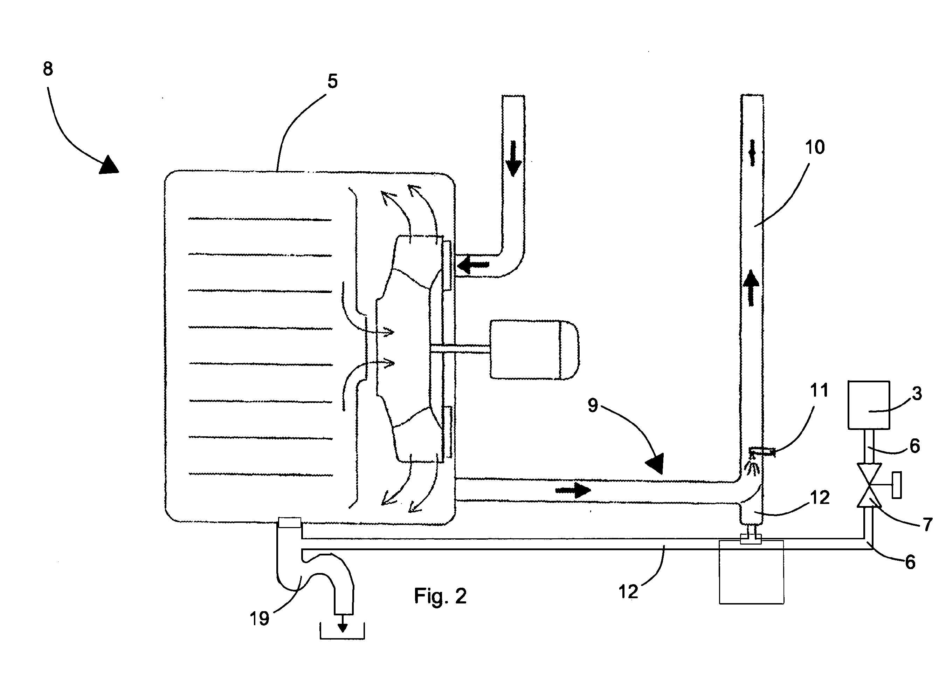

With reference to Figure 1, the system that is the object of the invention comprises a first supply circuit 1 that is suitable for procuring water from a water-distribution network R, a control system 21 for controlling the supply of water from the water-distribution network R, which is suitable for regulating the pressure of the water coming from said water-distribution network 1, comprising an anti-reflux valve 13, a pressure regulator 14 and a solenoid valve 15, that regulates the flow of water coming from the water-distribution network R. The system according to the invention further comprises a second supply circuit 2 by means of which the system is supplied with cleaning substances. The second supply circuit 2 is connected, for example, by a check valve 16 with two supply lines 2' and 2" that are suitable for supplying different cleaning substances, for example a polishing substance and a cleaning substance, contained in respective tanks 17 and 18. Each supply line 2' and 2" is provided with a respective pump 20' and 20" by which the respective cleaning substance is conveyed from the respective tank 17, 18 to a mixing unit 3 in which the water coming from the supply circuit 1 is mixed with said cleaning substances. The mixing unit 3 supplies a supply line 4 with dispersing means 5' and 5" found in a cooking chamber 5 of a cooking apparatus 8 (Figure 2), said dispersing means being able, for example, to comprise fixed dispersing nozzles 5' and rotating dispersing nozzles 5" that disperse into the cooking chamber 5 a mixture of water and said cleaning substances obtained in the supply chamber 3. The system further comprises a drainage device 19 connected to the cooking chamber 5 and a drainage circuit 6 by means of which the mixing unit 3 can be connected to the drainage device 19, by valve means 7, for example an emptying solenoid valve.

The drainage device 19 normally consists of a siphon having the object of isolating the cooking chamber from the drainage conduits to which the siphon is connected, for example, to prevent the reflux of unpleasant odours from the drainage conduits.

With reference to Figure 2, the system further comprises a system 9 for eliminating the vapours generated in the cooking chamber 5 during normal operation of the cooking apparatus 8. The system 9 for eliminating the vapours comprises a vent conduit 10 that is suitable for connecting said cooking chamber 5 to the external environment. Inside the vent conduit 10, near a lower end thereof, an injector 11 is arranged that is intended to spray water into the vent conduit 10 to eliminate the vapours coming from the cooking chamber 5. The condensate generated by the mixing between the water and said vapours is conveyed to a drainage conduit 12 that communicates with the drainage siphon 19.

The drainage conduit 6 of the mixing unit 3 can be connected directly to the drainage siphon 19 or be connected to the conduit 12 as shown in Figure 1. Operation of the system for a typical washing cycle of the chamber preferably comprises the steps disclosed below.

A step of sprinkling one of said cooling products in the cooking chamber 5, which consists of the following sequence of operations in the system: actuating the pump 20' or 20" of the detergent or of the polisher so as to load the desired quantity of cleaning substance in the mixing unit 3, subsequent activation, for a few seconds, of the solenoid valve 15 of the water supply circuit 1 to deliver pressurised water to the mixing unit 3 so as to dilute the cleaning substance by mixing the cleaning substance with the water and delivering to the cooking chamber 5, owing to the pressure of the water, the mixture of water and cleaning substance, through the supply line 4 and the dispersing devices 5' and 5".

When the step of sprinkling a cleaning product has terminated, the mixing unit 3 is emptied by opening the emptying solenoid valve 7 to convey the residual mixture of water and cleaning substance to the drainage siphon 19. Subsequently, a step of rinsing the cooking chamber 5 is conducted by again opening the solenoid valve 15 of the water supply circuit 1 by delivering the pressurised water to the mixing unit 3 and, from there, to the dispersing devices 5', 5", to rinse the cooking chamber 5.

At the end of the step of rinsing of the cooking chamber 5, the mixing unit 3 is emptied by draining the water still contained therein into the drainage siphon 19, by opening the emptying valve 7.

It should be noted that emptying of the mixing unit 3, in particular at the end of the rinsing step, before a new washing cycle is run, enables it to be ascertained that, at the start of the subsequent washing cycle, the cleaning substance is actually loaded in the mixing unit 3. In fact, by providing the mixing unit 3 with a level sensor, it is possible to check whether the level of the cleaning substance delivered to the mixing unit 3 reaches a preset value. Failure to reach said preset level indicates that the tanks 17, or 18, in which said substance is contained is empty, or that the corresponding pump 20', or 20" is broken. The level sensor can be connected to an alarm signal, for example an acoustic or luminous alarm, which warns an operator of failure to load the preset quantity of cleaning substance and, thus, of the need for an intervention.

The system according to the invention also enables a washing cycle of the drainage siphon 19 to be run, in particular when cooking cycles are run in the cooking chamber 5 that result in significant quantities of fat that, in addition to being deposited on the walls and on the bottom of the cooking chamber 5, also accumulates in the drainage siphon 19, until it may cause a blockage thereof. In fact, the drainage siphon 19 is normally the point that is most subject to stagnations of cooking residues or encrustations of fat.

The normal washing cycles of the cooking chamber 5 are not suitable for obtaining effective cleaning of the conduit and of the drainage device, because a large part of the cleaning substance used in said washing cycles reaches the discharge during the rinsing step, after removing the encrustations found in the cooking chamber, very diluted and therefore not very effective or completely ineffective.

In order to wash the drainage conduit, for a preset time the pump 20' is activated, which delivers a preset quantity of cleaning substance to the mixing unit 3. The emptying solenoid valve 7 is then actuated to dispatch the pure cleaning substance to the drainage siphon 19 through the conduit 6, lastly, water is dispensed into the drainage conduit 12 and into the drainage siphon 19 by the injector 11 of the vent conduit 10 to remove the residues of fat substances and rinse the drainage conduit 12 and the drainage siphon 19.

Before proceeding with the washing of the drainage siphon 19, it is advantageous to perform preheating of the cooking apparatus 8, so as to soften the deposits of fat in the drainage siphon 19, to promote the removal thereof by the cleaning substance.

The drainage siphon 19 can be washed in combination with a normal washing cycle of the cooking chamber 5, preferably before washing of the cooking chamber 5. Alternatively, the drainage siphon 19 can be washed independently of the washing cycle of the cooking chamber 5.

In the embodiment shown in Figure 1, in which the conduit 6 is connected to the conduit 12, the further advantage is obtained of cleaning also the conduit 12 of possible encrustations, for example, scale encrustations.

## Claims

1. System for cleaning a cooking apparatus (8) comprising a cooking chamber (5), said system comprising a first supply circuit (1) connected to a water-distribution network (R), a second supply circuit (2) connected to at least one tank (17; 18) containing at least one cleaning substance, a mixing unit (3) supplied by said first supply circuit (1) and by said second supply circuit (2), a supply line (4) that connects said mixing unit (3) to said cooking chamber (5), **characterised in that** said mixing unit (3) is connected to a drainage circuit (6) connected in turn to the drainage device (19) of said cooking apparatus.

2. System according to claim 1 wherein said drainage circuit (6) comprises valve means (7).

3. System according to any preceding claim wherein said second supply circuit (2) comprises a first supply line (2') that connects to said supply circuit (2) a first tank (17) containing a first cleaning substance and a second supply line (2") that connects a second tank (18) containing a second cleaning substance to said supply circuit, said first supply line (2') comprising a first pump (20') and said second supply line (2") comprising a second pump (20"), said first pump (20') and said second pump (20") being independently actuatable.

4. System according to any preceding claim, wherein said mixing unit (3) is provided with a liquid-level sensor.

5. System according to any preceding claim, further comprising dispersing means (5'; 5") suitable for conveying and dispersing said water and said cleaning substances in said cooking chamber (5), said dispersing means (5'; 5") being supplied by said mixing unit (3).

6. System according to any preceding claim further comprising a system (9) for eliminating the vapours generated in said cooking chamber (5), said system comprising a vent conduit (10) suitable for conveying said vapours towards an external environment of the cooking apparatus (8) and injecting means (11) inside said vent conduit (10) suitable for injecting water into said vent conduit (10) to condensate said vapours.

7. System according to claim 6, wherein said vent conduit is connected to said drainage device (19) through a drainage conduit (12).

8. System according to claim 7, wherein said drainage conduit (6) of the mixing unit (3) is connected to said drainage conduit (12).

9. Method for cleaning the drainage device (19) of a cooking apparatus (8) comprising a cooking chamber (5) and a drainage device (19) connected to said cooking chamber, which drainage device (19) is suitable for evacuating from said cooking chamber (5) liquids delivered into said cooking chamber (5), **characterised in that** a cleaning substance is delivered directly to said drainage device (19).

10. Method according to claim 9, further comprising delivering a cleaning substance into a mixing unit (3), and draining said cleaning substance in the drainage device (19) through a conduit (6).

11. Method according to claim 10, further comprising checking that a preset quantity of said cleaning substance has been delivered into said mixing unit (3) before draining said cleaning substance in the drainage device (19).

12. Method according to claims 9 to 11, further comprising delivering in a step that is after the drainage of said cleaning substance a given quantity of water to the drainage device (19) through an injector (11) and a conduit (12).

13. Method according to claims 9 to 12, further comprising an initial cooking chamber (5) heating step preceding the drainage step of draining the cleaning substance into the drainage device (19).

14. Method according to claims 9 to 13 **characterised in that** drainage device washing occurs in combination with a normal washing cycle of the cooking chamber (5).

15. Method according to claim 14 **characterised in that** the drainage device is washed immediately before a normal washing cycle of the cooking chamber (5), or that the drainage device is washed immediately after a normal washing cycle of the cooking chamber (5), or that the drainage device is washed independently of the normal washing cycles of the cooking chamber (5).

## Patentansprüche

1. System zum Reinigen einer Kochvorrichtung (8) mit einer Kochkammer (5), wobei das System einen ersten Zuführungskreislauf (1), der mit einem Wasserverteilungsnetz (R) verbunden ist, einen zweiten Zuführungskreislauf (2), der mit mindestens einem Tank (17; 18) verbunden ist, der mindestens eine Reinigungssubstanz enthält, eine Mischeinheit (3), die durch den ersten Zuführungskreislauf (1) und durch den zweiten Zuführungskreislauf (2) versorgt wird, eine Zuführungsleitung (4), die die Mischeinheit (3) mit der Kochkammer (5) verbindet, umfasst, **dadurch gekennzeichnet, dass** die Mischeinheit (3) mit einem Ableitungskreislauf (6) verbunden ist, der wiederum mit der Ableitungsvorrichtung (19) der Kochvorrichtung verbunden ist.

2. System nach Anspruch 1, wobei der Ableitungskreislauf (6) eine Ventileinrichtung (7) umfasst.

3. System nach einem vorangehenden Anspruch, wobei der zweite Zuführungskreislauf (2) eine erste Zuführungsleitung (2'), die einen ersten Tank (17), der eine erste Reinigungssubstanz enthält, mit dem Zuführungskreislauf (2) verbindet, und eine zweite Zuführungsleitung (2"), die einen zweiten Tank (18), der eine zweite Reinigungssubstanz enthält, mit dem Zuführungskreislauf verbindet, umfasst, wobei die erste Zuführungsleitung (2') eine erste Pumpe (20') umfasst und die zweite Zuführungsleitung (2") eine zweite Pumpe (20") umfasst, wobei die erste Pumpe (20') und die zweite Pumpe (20") unabhängig betätigbar sind.

4. System nach einem vorangehenden Anspruch, wobei die Mischeinheit (3) mit einem Flüssigkeitspegelsensor versehen ist.

5. System nach einem vorangehenden Anspruch, das ferner eine Verteilungseinrichtung (5'; 5") umfasst, die zum Befördern und Verteilen des Wassers und der Reinigungssubstanzen in der Kochkammer (5) geeignet ist, wobei die Verteilungseinrichtung (5'; 5") von der Mischeinheit (3) versorgt wird.

6. System nach einem vorangehenden Anspruch, das ferner ein System (9) zum Beseitigen der Dämpfe, die in der Kochkammer (5) erzeugt werden, umfasst, wobei das System einen Lüftungskanal (10), der zum Befördern der Dämpfe in Richtung einer äußeren Umgebung der Kochvorrichtung (8) geeignet ist, und eine Einspritzeinrichtung (11) innerhalb des Lüftungskanals (10), die zum Einspritzen von Wasser in den Lüftungskanal (10), um die Dämpfe zu kondensieren, geeignet ist, umfasst.

7. System nach Anspruch 6, wobei der Lüftungskanal mit der Ableitungsvorrichtung (19) durch einen Ableitungskanal (12) verbunden ist.

8. System nach Anspruch 7, wobei der Ableitungskanal (6) der Mischeinheit (3) mit dem Ableitungskanal (12) verbunden ist.

9. Verfahren zum Reinigen der Ableitungsvorrichtung (19) einer Kochvorrichtung (8) mit einer Kochkammer (5) und einer Ableitungsvorrichtung (19), die mit der Kochkammer verbunden ist, wobei die Ableitungsvorrichtung (19) zum Entleeren von Flüssigkeiten aus der Kochkammer (5), die in die Kochkammer (5) geliefert werden, geeignet ist, **dadurch gekennzeichnet, dass** eine Reinigungssubstanz direkt in die Ableitungsvorrichtung (19) geliefert wird.

10. Verfahren nach Anspruch 9, das ferner das Liefern einer Reinigungssubstanz in eine Mischeinheit (3) und das Ableiten der Reinigungssubstanz in der Ableitungsvorrichtung (19) durch einen Kanal (6) umfasst.

11. Verfahren nach Anspruch 10, das ferner das Prüfen, dass eine vorgegebene Menge der Reinigungssubstanz in die Mischeinheit (3) geliefert wurde, bevor die Reinigungssubstanz in der Ableitungsvorrichtung (19) abgeleitet wird, umfasst.

12. Verfahren nach den Ansprüchen 9 bis 11, das ferner in einem Schritt, der nach dem Ableiten der Reinigungssubstanz stattfindet, das Liefern einer gegebenen Menge an Wasser zur Ableitungsvorrichtung (19) durch eine Einspritzdüse (11) und einen Kanal (12) umfasst.

13. Verfahren nach den Ansprüchen 9 bis 12, das ferner einen anfänglichen Schritt zum Heizen der Kochkammer (5) umfasst, der dem Ableitungsschritt zum Ableiten der Reinigungssubstanz in die Ableitungsvorrichtung (19) vorangeht.

14. Verfahren nach den Ansprüchen 9 bis 13, **dadurch gekennzeichnet, dass** das Ableitungsvorrichtungswaschen in Kombination mit einem normalen Waschzyklus der Kochkammer (5) stattfindet.

15. Verfahren nach Anspruch 14, **dadurch gekennzeichnet, dass** die Ableitungsvorrichtung unmittelbar vor einem normalen Waschzyklus der Kochkammer (5) gewaschen wird oder dass die Ableitungsvorrichtung unmittelbar nach einem normalen Waschzyklus der Kochkammer (5) gewaschen wird oder dass die Ableitungsvorrichtung unabhängig von den normalen Waschzyklen der Kochkammer (5) gewaschen wird.

## Revendications

1. Système pour le nettoyage d'un appareil de cuisson (8) comprenant une chambre de cuisson (5), ledit système comprenant une premier circuit d'alimentation (1) raccordé à un réseau de distribution d'eau (R), un deuxième circuit d'alimentation (2) raccordé à un premier réservoir (17; 18) contenant au moins une substance de nettoyage, une unité de mélange (3) alimentée par ledit premier circuit d'alimentation (1) et par ledit deuxième circuit d'alimentation (2), une canalisation d'alimentation (4) qui relie ladite unité de mélange (3) à ladite chambre de cuisson (5), ***caractérisé en ce que*** ladite unité de mélange (3) est raccordée à un circuit d'évacuation (6), raccordé à son tour au système d'évacuation (19) dudit appareil de cuisson.

2. Système selon la revendication 1, dans lequel ledit circuit d'évacuation (6) comprend des moyens de vanne (7).

3. Système selon l'une quelconque des revendications précédentes, dans lequel ledit deuxième circuit d'alimentation (2) comprend une première canalisation d'alimentation (2') qui relie audit circuit d'alimentation (2) un premier réservoir (17) contenant une première substance de nettoyage et une deuxième canalisation d'alimentation (2") qui relie un deuxième réservoir (18) contenant une deuxième substance de nettoyage, audit circuit d'alimentation, ladite première canalisation d'alimentation (2') comprenant une première pompe (20') et ladite deuxième canalisation d'alimentation (2") comprenant une deuxième pompe (20"), ladite première pompe (20') et ladite deuxième pompe (20") étant utilisables de manière indépendante.

4. Système selon l'une quelconque des revendications précédentes, dans lequel ladite unité de mélange (3) est pourvue d'un capteur de niveau de liquide.

5. Système selon l'une quelconque des revendications précédentes, comprenant en outre des moyens de dispersion (5' ; 5") aptes à acheminer et disperser ladite eau et lesdites substances de nettoyage dans ladite chambre de cuisson (5), lesdits moyens de dispersion (5' ; 5") étant fournis par ladite unité de mélange (3).

6. Système selon l'une quelconque des revendications précédentes, comprenant en outre un système (9) pour éliminer les vapeurs générées dans ladite chambre de cuisson (5), ledit système comprenant un conduit d'évent (10) apte à acheminer lesdites vapeurs vers un environnement extérieur de l'appareil de cuisson (8), et des moyens d'injection (11) à l'intérieur dudit conduit d'évent (10) aptes à injecter de l'eau dans ledit conduit d'évent (10) de manière à condenser lesdites vapeurs.

7. Système selon la revendication 6, dans lequel ledit conduit d'évent est raccordé audit système d'évacuation (19) via un conduit d'évacuation (12).

8. Système selon la revendication 7, dans lequel ledit conduit d'évacuation (6) de l'unité de mélange (3) est raccordé audit conduit d'évacuation (12).

9. Procédé de nettoyage du système d'évacuation (19) d'un appareil de cuisson (8) comprenant une chambre de cuisson (5) et un système d'évacuation (19) raccordé à ladite chambre de cuisson, le système d'évacuation (19) étant apte à l'évacuation hors de ladite chambre de cuisson (5) de liquides fournis dans ladite chambre de cuisson (5), ***caractérisé en ce qu*'**une substance de nettoyage est fournie directement audit système d'évacuation (19).

10. Procédé selon la revendication 9, comprenant en outre la fourniture d'une substance de nettoyage dans une unité de mélange (3) et l'évacuation de ladite substance de nettoyage dans le système d'évacuation (19) via un conduit (6).

11. Procédé selon la revendication 10, comprenant en outre la vérification qu'une quantité présélectionnée de ladite substance de nettoyage a été fournie dans ladite unité de mélange (3) avant d'évacuer ladite substance de nettoyage dans le système d'évacuation (19).

12. Procédé selon les revendications 9 à 11, comprenant en outre la fourniture, dans une étape qui a lieu après l'évacuation de ladite substance de nettoyage, d'une quantité donnée d'eau au système d'évacuation (19) via un injecteur (11) et un conduit (12).

13. Procédé selon les revendications 9 à 12, comprenant en outre une étape initiale de chauffage de la chambre de cuisson précédant l'étape d'évacuation de la substance de nettoyage dans le système d'évacuation (19).

14. Procédé selon les revendications 9 à 13, ***caractérisé en ce que*** le lavage du système d'évacuation se fait en combinaison avec un cycle normal de lavage de la chambre de cuisson (5).

15. Procédé selon la revendication 14, ***caractérisé en ce que*** le système d'évacuation est lavé immédiatement avant un cycle normal de lavage de la chambre de cuisson (5), ou *en ce que* le système d'évacuation est lavé immédiatement après un cycle normal de lavage de la chambre de cuisson (5), ou ***en ce que*** le système d'évacuation est lavé indépendamment des cycles normaux de lavage de la chambre de cuisson (5).
